# EUROPÄISCHE PATENTSCHRIFT

(11) **EP 2 593 681 B1**
(45) Veröffentlichungstag und Bekanntmachung des Hinweises auf die Patenterteilung: **16.10.2019**
(21) Anmeldenummer: 11726431.7
(22) Anmeldetag: 21.06.2011
(51) Int. Cl.: F04D 25/06, F04D 25/08, F04D 29/26, F04D 29/28, H02K 7/00, H02K 7/14

(54) **GEBLÄSEMODUL**
FAN MODULE
MODULE DE SOUFFLANTE

(30) Priorität: 14.07.2010 DE 102010031303
(43) Veröffentlichungstag der Anmeldung: 22.05.2013
(73) Patentinhaber: Robert Bosch GmbH, 70442 Stuttgart (DE)
(72) Erfinder: SCHIEL, Andreas, 76593 Gernsbach-Lautenbach (DE); LUDWIG, Matthias, 76547 Sinzheim (DE)
(86) Internationale Anmeldenummer: PCT/EP2011/060289
(87) Internationale Veröffentlichungsnummer: WO 2012/007253

(56) Entgegenhaltungen:
- EP-A1- 0 251 896
- CN-U- 2 069 045
- DE-A1- 4 041 739
- TW-B- 479 394
- US-B1- 7 045 919

## Beschreibung

Die Erfindung betrifft ein Gebläsemodul, insbesondere für Klimageräte in Fahrzeugen, aufweisend einen Elektromotor und einen Gebläserotor, wobei der Elektromotor und der Gebläserotor auf einer Rotorwelle angeordnet sind und mittels einer Antriebsverbindung miteinander verbunden sind und wobei der Elektromotor ausgelegt ist, den Gebläserotor über die Antriebsverbindung anzutreiben.

### Stand der Technik

Der Fahrgastraum in Fahrzeugen wird zur Klimatisierung, zur Erhöhung des Komforts und der Fahrsicherheit durch ein Lüftungssystem belüftet, an welchem ein Heizungs- und/oder ein Klimagerät angeschlossen ist. Um die Luft in dem Fahrgastraum zu fördern, ist an dem Lüftungssystem ein Gebläsemodul angeschlossen, welches Frischluft aus der Umgebung des Fahrzeugs ansaugt und in das Heizungs- und/oder Klimagerät leitet, um so die angesaugte Luft auf die gewünschte Temperatur zur bringen. Die durch den Fahrgastinnenraum strömende Luft wird meist durch Lüftungsschlitze, z. B. an der Hutablage, aus dem Fahrzeuginnenraum geführt.

Das an das Lüftungssystem angeschlossene Gebläsemodul ist üblicherweise als Radialverdichter aufgebaut, welcher durch einen Elektromotor angetrieben wird. Der Elektromotor ist dabei in seiner Bauart in das Gebläsemodul integriert und zumeist als bürstenloser Elektromotor in der Bauform eines Außenläufers ausgebildet. Um das Drehmoment des Elektromotors an einen Gebläserotor des Gebläsemoduls zu übertragen, weist das Gebläsemodul üblicherweise eine Welle-Nabe-Verbindung auf, die als formschlüssige oder kraftschlüssige Verbindung ausgebildet ist. Die Welle-Nabe-Verbindung muss aufgrund des großen Temperaturbereichs, in dem das Gebläsemodul eingesetzt wird, eine hohe Qualität aufweisen, um geräuscharm und zuverlässig das Drehmoment des Elektromotors an den Gebläserotor zu übertragen.

Aus der CN 2 069 045 U, EP 0 251 096 A1, DE 40 41 739 A1, US 7,045,919 B1 und TW 479 394 B sind Gebläsemodule aufweisend einen Elektromotor und einen Gebläserotor bekannt, wobei der Elektromotor und der Gebläserotor auf einer Rotorwelle angeordnet sind und mittels einer Antriebsverbindung miteinander verbunden sind.

### Offenbarung der Erfindung

Es ist Aufgabe der Erfindung, ein verbessertes Gebläsemodul zur Verfügung zu stellen.

Diese Aufgabe wird durch ein Gebläsemodul gemäß Anspruch 1 gelöst. Bevorzugte Ausführungsformen sind in den abhängigen Ansprüchen angegeben.

Erfindungsgemäß wird ein Gebläsemodul, insbesondere für Klimageräte in Fahrzeugen, aufweisend einen Elektromotor und einen Gebläserotor vorgeschlagen. Dabei sind der Elektromotor und der Gebläserotor auf einer Rotorwelle angeordnet und mittels einer Antriebsverbindung miteinander verbunden. Der Elektromotor treibt den Gebläserotor über die Antriebsverbindung an, wobei die Antriebsverbindung eine formschlüssige Verbindung mit einem Mitnehmer und einem Mitnehmergegenstück aufweist. Der Mitnehmer am Elektromotor und das Mitnehmergegenstück am Gebläserotor sind radial beabstandet zur Rotorwelle angeordnet. Dabei ist der Mitnehmer ausgelegt, zur Kraftübertragung vom Elektromotor zum Gebläserotor das Mitnehmergegenstück des Gebläserotors zu betätigen.

Auf diese Weise wird eine formschlüssige Verbindung für die Antriebsverbindung bereitgestellt, über die das Drehmoment zuverlässig bei unterschiedlichsten Temperaturen übertragen werden kann, wobei zusätzlich eine verbesserte Laufruhe des Gebläselüfters zur Verfügung gestellt wird.

Der Mitnehmer weist wenigstens zwei Mitnehmerelemente auf, die stiftförmig ausgebildet und parallel zur Rotationsachse ausgerichtet sind, wobei die Mitnehmerelemente U-förmig vom Mitnehmergrund des Mitnehmers wegstehend angeordnet sind und die Aufnahme ausbilden. Auf diese Weise wird eine besonders einfache formschlüssige Verbindung bereitgestellt, um ein Drehmoment des Elektromotors auf den Gebläserotor zu übertragen.

In einer weiteren Ausführungsform der Erfindung ist das Mitnehmergegenstück als Versteifungsrippe des Gebläserotors ausgebildet, wobei der Mitnehmer die Versteifungsrippe des Gebläserotors betätigt, um den Gebläserotor anzutreiben. Durch diese Ausgestaltung kann der Gebläserotor besonders einfach ausgebildet werden.

In einer weiteren Ausführungsform der Erfindung weist die Aufnahme eine Presspassung zu einer Dicke der Versteifungsrippe in einem Befestigungsbereich der Versteifungsrippe auf. Auf diese Weise können zuverlässig Geräuschbildungen beim Übertragen des Drehmoments des Elektromotors an den Gehäuserotor vermieden werden.

In einer weiteren Ausführungsform der Erfindung ist der Mitnehmer einstückig und materialeinheitlich mit einem Gehäuseteil des Gehäuses des Elektromotors ausgebildet. Auf diese Weise kann die formschlüssige Verbindung kostengünstig, beispielsweise in einem Spritzgussverfahren, hergestellt werden.

In einer weiteren Ausführungsform der Erfindung umfasst das Gebläsemodul eine Rotorwelle, die auf der Rotationsachse des Gebläsemoduls angeordnet ist. Die Rotorwelle dient zur axialen Sicherung des Gebläserotors und ist mittels einer kraftschlüssigen Verbindung mit diesem verbunden. Dabei ist der Mitnehmer ausgelegt, überwiegend das Drehmoment des Elektromotors zu übertragen, während die kraftschlüssige Verbindung die axiale Sicherung des Gebläserotors übernimmt. Auf diese Weise kann die kraftschlüssige Verbindung kleiner und kostengünstiger durch eine kostengünstige Materialwahl ausgebildet werden.

Nachfolgend wird die Erfindung anhand von Figuren näher erläutert. Dabei zeigen:
Figur 1 einen Längsschnitt durch ein Gebläsemodul entlang einer Rotationsachse;
Figur 2 einen Ausschnitt des in Figur 1 gezeigten Längsschnitts des Gebläsemoduls;
Figur 3 einen Längsschnitt durch ein weiteres Gebläsemodul entlang der Rotationsachse;
Figur 4 einen Schnitt quer zur Rotationsachse durch das weitere Gebläsemodul; und
Figur 5 eine perspektivische Teilschnitt durch das weitere Gebläsemodul.

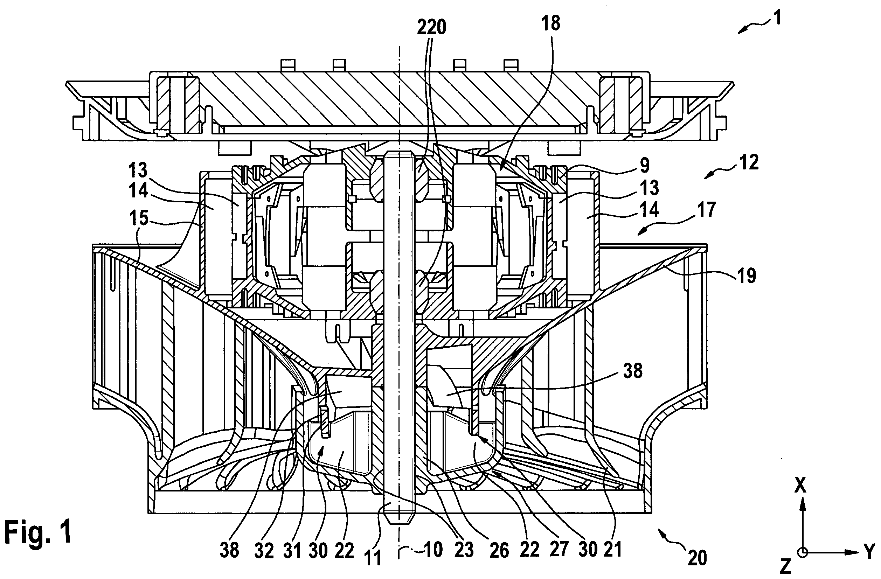

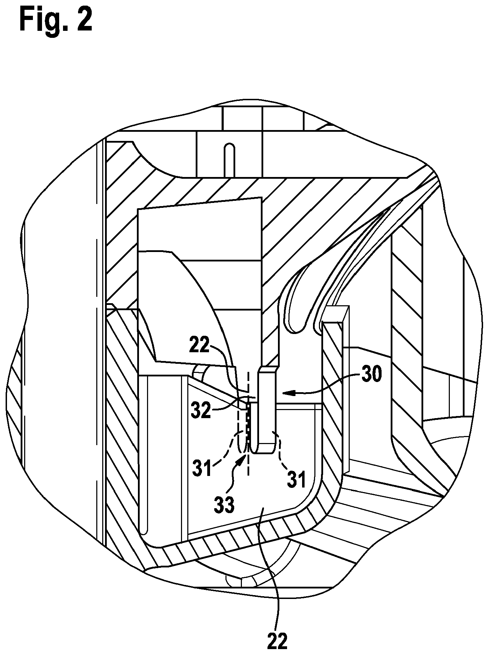

Figur 1 zeigt einen Längsschnitt durch ein erstes Gebläsemodul 1 und Figur 2 zeigt einen Ausschnitt des in Figur 1 gezeigten Längsschnitts. In Figur 1 und den folgenden Figuren ist ferner ein Koordinatensystem mit aufeinander senkrecht stehenden Richtungen x, y, z dargestellt, anhand derer die Funktionsweise des Gebläsemoduls 1, 2 beschrieben wird.

Das erste Gebläsemodul 1 umfasst einen Elektromotor 12, der einen Rotor 17 und einen Stator 18 umfasst. Der Stator 18 umfasst einen rotationssymmetrisch zu einer Rotationsachse 10 (y-Richtung) des Rotors 17 ausgebildeten Träger 9, wobei radial außen liegend um den Träger 9 mehrere Wicklungen 13 des Stators 18 angeordnet sind. Innenseitig nimmt der Träger 9 zwei Lager 220 zur Lagerung des Rotors 17 auf.

Der Rotor 17 des Elektromotors 12 ist als Außenläufer ausgebildet und umfasst ein Rotorgehäuse 19, das den Stator 18 radial teilweise umgreift, und innenseitig in Umlaufrichtung radial am Rotorgehäuse 19 angeordnete Magnete 14. Ferner umfasst das Gebläsemodul 1 eine Rotorwelle 11 auf der der Rotor 17 des Elektromotors 12 angeordnet ist. Die Rotorwelle 12 ist auf der Rotationsachse 10 des Gebläsemoduls 1 angeordnet und ist von den Lagern 220 des Stators 18 drehbar um die Rotationsachse 10 gelagert. Auf einer Stirnseite (x-z-Ebene), die einem im folgenden näher erläuterten Gebläserotor 20 zugewandt ist, weist das Rotorgehäuse 19 des Rotors 17, einen Mitnehmer 30 auf, der in Richtung des Gebläserotors 20 ausgebildet ist (y-Richtung) und radial von der Rotationsachse 10 beabstandet ist. Ferner weist das Rotorgehäuse 19 ein Kühlluftgebläse 38 auf, das den Elektromotor 12 im Betrieb mit Kühlluft versorgt.

Unterhalb des Elektromotors 12 ist auf der Rotationsachse 10 der Gebläserotor 20 angeordnet. Der Gebläserotor 20 ist als Radialverdichter mit mehreren radial außen liegenden Verdichterschaufeln 21 ausgebildet und fördert Luft von einer unterseitig angeordneten Eingangsseite des Gebläsemoduls 1 zu einer radial außen angeordneten Ausgangsseite des Gebläsemoduls 1 (nicht dargestellt).

Der Gebläserotor 20 umfasst einen radial innen liegend angeordneten wannenförmig ausgebildeten Bereich 27, mehrere Versteifungsrippen 22 und einen Anlagebereich 23 einer Buchse 26 für eine kraftschlüssige Verbindung zur Rotorwelle 11. Der wannenförmige Bereich 27 ist zum Rotor 17 des Elektromotors 12 hin geöffnet ausgebildet. Die Versteifungsrippen 22 des Gebläserotors 20 sind in regelmäßigen Winkelabständen von 60° in Umlaufrichtung um die Rotationsachse 10 im wannenförmigen Bereich 27 des Gebläserotors 20 angeordnet und verbinden die Buchse 26 und den radial außen liegend angeordneten Bereich mit den Verdichterschaufeln 21. Die Versteifungsrippen 22 sind plattenförmig, einstückig und materialeinheitlich mit dem Gebläserotor 20 ausgebildet. Die Anordnung der Versteifungsrippen 22 im wannenförmigen Bereich 27 gewährleistet eine schwingungsarme Abstützung von Kräften aus der kraftschlüssigen Verbindung zwischen Buchse 26 und Rotorwelle 11 und aus den Verdichterschaufeln 21 des Gebläserotors 20.

Die Buchse 26 ist radial innenliegend am wannenförmigen Bereich 27 angeordnet, wobei der Anlagebereich 23 der Buchse 26 der Rotorwelle 11 zugewandt ist. Die Buchse 26 mit der Anlagefläche 23 und die Rotorwelle 11 sind derart aufeinander abgestimmt, dass eine kraftschlüssige Verbindung 11, 23 an der Buchse 26 und der Rotorwelle 11 vorliegt. Die kraftschlüssige Verbindung 11, 23 dient dazu, den Gebläserotor 20 axial an dem Elektromotor 12 zu befestigen und den Gebläserotor 20 über die Lager 22 des Elektromotors 12 zu lagern. Ein Drehmoment des Elektromotors 12 soll bevorzugterweise über eine im Folgenden näher erläuterte formschlüssige Verbindung 22, 30 übertragen werden.

Der Mitnehmer 30 umfasst einen Mitnehmergrund 32 und daran angeordnetete, stiftförmig ausgebildete Mitnehmerelemente 31. Der Mitnehmergrund 32 ist am Rotorgehäuse 19 des Rotors 17 angeordnet und ist axial in Richtung des Gebläserotors 20 ausgerichtet. Ferner ist der Mitnehmergrund 32 in Umlaufrichtung des Rotorgehäuses 19 ausgebildet. Die Mitnehmerelemente 31 sind in Umlaufrichtung des Elektromotors 12 am Mitnehmergrund 32 des Rotorgehäuses 19 jeweils paarweise angeordnet. Die Mitnehmerelemente 31 des Mitnehmers 30 sind dabei in y-Richtung ausgebildet und U-förmig vom Mitnehmergrund 32 wegstehend angeordnet, wobei jeweils zwei Mitnehmerelemente 31 zumindest teilweise eine Versteifungsrippe 22 als Mitnehmergegenstück in montiertem Zustand des Gebläsemoduls 1 umfassen. Dabei bilden die beiden Mitnehmerelemente 31 des Mitnehmers 30 eine Aufnahme 33 aus, in die die Versteifungsrippe 22 als korrespondierendes Mitnehmergegenstück in montiertem Zustand des Gebläsemoduls 1 eingreift. Die Aufnahme 33 des Mitnehmers 30 weist eine erste Längsachse 34 auf, die parallel zur Rotationsachse 10 des Gebläsemoduls 1 ausgerichtet ist. Die Aufnahme 33 ist derart an eine Dicke der Versteifungsrippe 22 angepasst, dass sie zur Dicke der Versteifungsrippe 22 eine Presspassung in dem Anlagebereich der Aufnahme 33 ausbildet. Die Presspassung der Aufnahme 33 und an der Versteifungsrippe 22 hat dabei den Vorteil, dass die Geräuschentwicklung des Gebläsemoduls 1 reduziert ist.

Wird der Elektromotor 12 des Gebläsemoduls 1 bestromt, so stellt der Elektromotor 12 an dem Rotor 17 ein Drehmoment zum Antrieb des Gebläserotors 20 bereit. Das Drehmoment des Elektromotors 12 wird vom Rotor 17 des Elektromotors 12 zum Gebläserotor 20 durch den Eingriff des Mitnehmers 30 in die Versteifungsrippen 22 des Gebläserotors 20 übertragen. Dabei wird durch die Ausbildung des Mitnehmers 30 und der Versteifungsrippe 22 eine formschlüssige Verbindung zwischen dem Elektromotor 12 und dem Gebläserotor 20 bereitgestellt, die einfach montierbar ist und zuverlässig ein hohes Drehmoment des Elektromotors 12 an den Gebläserotor 20 übertragen kann. Durch den Eingriff des Mitnehmers 30 in die Versteifungsrippen 22 weist die formschlüssige Verbindung 22, 30 ein temperaturstabiles Verhalten auf, sodass auch bei kritischen hohen Temperaturen, wie sie im Bereich des Motorraums eines Kraftfahrzeugs oftmals vorkommen, das Drehmoment des Elektromotors 12 zuverlässig übertragen werden kann.

Die kraftschlüssige Verbindung 11, 23 ist in der Ausführungsform ausgelegt, wie oben erwähnt, den Gebläserotor 20 an dem Rotor 17 des Elektromotors 12 zu befestigen. Aufgrund der Drehmomentübertragung über die formschlüssige Verbindung 22, 30 mittels des Mitnehmers 30 und der Versteifungsrippen 22, ist die formschlüssige Verbindung 11, 23 auf die gegenüber den Kräften aus dem Drehmomentsübertragung geringeren axialen Kräften zum Befestigen des Gebläserotors 20 am Elektromotor 12 ausgelegt. Ferner kann die kraftschlüssige Verbindung 11, 23 zwischen Gebläserotor 20 und dem Elektromotor 12 durch die geringe Belastung temperaturstabil ausgebildet werden.

Durch eine einstückige und materialeinheitliche Ausbildung des Mitnehmers 30 mit dem Rotorgehäuse 19 des Elektromotors 12 kann der Mitnehmer 30 zusammen mit dem Rotorgehäuse 19 einfach in einem Spritzgussverfahren hergestellt werden.

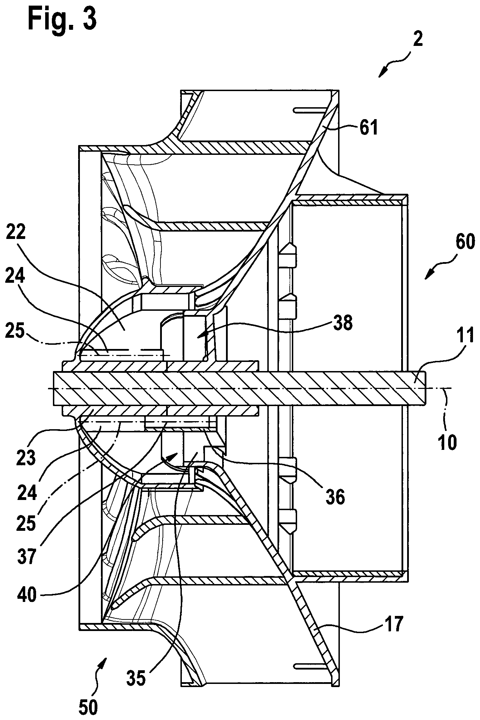

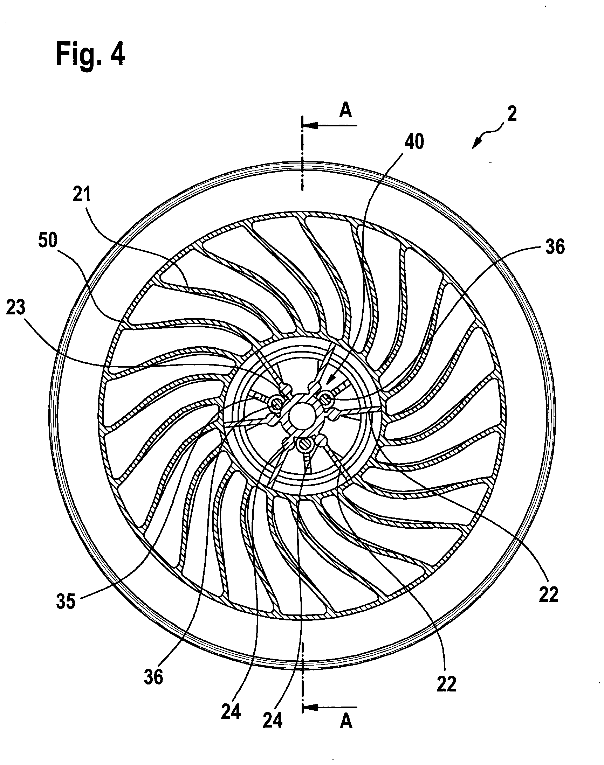

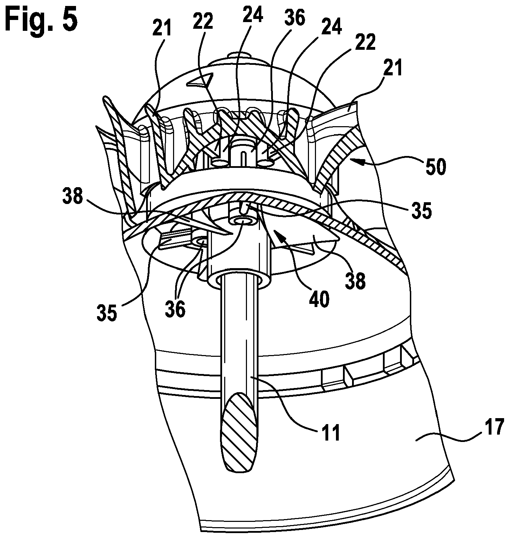

Figur 3 zeigt einen Schnitt längs der Rotationsachse 10 durch ein weiteres Gebläsemodul 2. Figur 4 zeigt einen Schnitt quer zur Rotationsachse 10 des weiteren Gebläsemoduls 2 und Figur 5 zeigt einen perspektivischen Schnitt durch das weitere Gebläsemodul 2 entlang der Rotationsachse 10.

Das weitere Gebläsemodul 2 ist dabei im Wesentlichen gleich zu dem in den Figuren 1 und 2 gezeigten Gebläsemodul ausgebildet und umfasst einen Gebläserotor 50 und einen Rotor 60 des Elektromotors 12 mit einem Rotorgehäuse 61. Das Rotorgehäuse 61 umfasst an der Stirnseite, die dem Gebläseroter 50 zugewandt ist, einen Mitnehmer 40, der in den wannenförmigen Bereich 37 des Gebläserotors 50 ragt. Auch in der in den Figuren 3 bis 5 gezeigten Ausführungsform ist der Gebläserotor 50 mittels der kraftschlüssigen Verbindung 11, 23 zwischen der Buchse 26 des Gebläserotors 50 und der Rotorwelle 11 an dem Elektromotor 12 befestigt.

Der Mitnehmer 40 umfasst mehrere Stifte 36, die in der Ausführungsform beispielhaft hohlzylindrisch ausgebildet ist. Jeweils ein Stift 36 des Mitnehmers 40 weist eine zweite Längsachse 37 auf, die parallel zur Rotationsachse 10 angeordnet ist. Dabei sind die Stifte 36 rückseitig mit jeweils mit einer Gehäuserippe 35 des Gebläserotors 50 verbunden. Die Stifte 36 des Mitnehmers 40 sind, etwa im 120°-Winkelabstand zueinander um die Rotationsachse 10 des Gebläsemoduls 2 in einem gleichen radialen ersten Abstand zu der Rotationsachse 10 des Gebläsemoduls 2 um diese herum angeordnet.

Der Gebläserotor 50 umfasst, wie auch der in den Figuren 1 und 2 gezeigte Gebläserotor 20, mehrere Versteifungsrippen 22, die einen äußeren radialen Gehäuseteil mit der Buchse 26 in dem wannenförmigen Bereich 27 verbinden. Die Versteifungsrippen 22 sind in etwa 60°-Winkelabstand zueinander um die Rotationsachse angeordnet. An den Versteifungsrippen 22 weist der Gebläserotor 50 jeweils eine zylindrisch ausgebildete Verdickung 24 als korrespondierendes Mitnehmergegenstück zum Mitnehmer 40 auf. Die Verdickung 24 umfasst eine dritte Längsachse 25, die ebenso wie die erste Längsachse 34 des in Figur 1 und 2 gezeigten Mitnehmers 30 parallel zur Rotationsachse 10 (y-Richtung) angeordnet ist. Ferner ist die dritte Längsachse 25 der Verdickung 24 jeweils in der Ebene der korrespondierenden Versteifungsrippe 22 angeordnet. Die dritten Längsachsen 25 der Verdickungen 24 sind kreisförmig mit einem zweiten Abstand zu der Rotationsachse 10 um diese herum angeordnet. In der Ausführungsform ist ein erster Abstand der zweiten Längsachse 37 der Stifte 36 kleiner gewählt als ein zweiter Abstand der dritten Längsachsen 25 der Verdickungen 24. Dadurch kann die Position des Gebläserotors 50 in der Montage zuverlässig festgelegt werden. Zur Festlegung der Position ist aber alternativ auch denkbar, den ersten Abstand der Stifte 36 zur Rotationsachse 10 größer als den zweiten Abstand der Verdickungen 24 zur Rotationsachse 10 zu wählen.

In montiertem Zustand des Gebläsemoduls 2 ragt jeweils ein Stift 36 des Mitnehmers 40 zwischen zwei Versteifungsrippen 22 hinein, wobei jeder Stift 36 zu jeweils einer Verdickung 24 einer Versteifungsrippe 22 einen Berührkontakt aufweist. Dabei bilden jeweils zwei benachbarte Stifte 36 eine Aufnahme 28, in der die Versteifungsrippe 22 mit der Verdickung 24 in montiertem Zustand angeordnet ist. Dabei wird eine formschlüssige Verbindung 22, 24, 40 bereit gestellt, die ausgelegt ist, das Drehmoment des Elektromotors 12 an den Gebläserotor 50 zu übertragen. Liegt an dem Rotor 60 ein Drehmoment an, so drückt jeweils ein Stift 36 in Richtung des Drehmoments des Elektromotors 12 in dem Berührkontakt gegen die an dem Stift 36 anliegende Verdickung 24 der Versteifungsrippe 22 und überträgt das Drehmoment des Elektromotors 12 auf den Gebläserotor 50.

Die hohlzylindrische Ausbildung der Stifte 36 hat ferner den Vorteil, dass sich jeweils ein Stift 36 durch eine elastische Verformung an den Abstand zwischen zwei nebeneinander angeordneten Verdickung 24 anpasst. Dabei können der Stift 36 bzw. die Verdickungen 24 des Gebläserotors 50 derart aufeinander abgestimmt sein, dass zwischen dem Stift 36 und den zwei zugeordneten Verdickungen 24 eine Presspassung vorliegt bzw., dass der Stift 36 zwischen die zwei Verdickungen verspannt oder eingepresst ist. Dies ermöglicht es den Gebläserotor 50 an dem Rotor 60 des Elektromotors 12 axial zu befestigen und/oder eine zusätzliche Sicherungskraft zu der kraftschlüssigen Verbindung 26, 11 aufzubauen. Dieser Vorteil gewährleistet ferner einen geräuscharmen Lauf des Gebläsemoduls 2.

Eine erleichterte Montage des Gebläsemoduls 2 kann dadurch bereitgestellt werden, dass die Stifte 36 des Mitnehmers 40 in regelmäßigem Abstand, in der Ausführungsform im 60°-Winkel, um die Rotationsachse 10 des Gebläsemoduls 2 angeordnet sind. Dies gewährleistet, dass für den Gebläserotor 50 sechs mögliche Montagepositionen an dem Rotor 60 des Elektromotors 12 zur Verfügung gestellt werden können, sodass eine Montageposition schnell auffindbar ist.

Die anhand der Figuren erläuterten Ausführungsformen von Gebläsemodulen 1, 2 und deren Komponenten stellen bevorzugte bzw. beispielhafte Ausführungsformen der Erfindung dar. Neben den beschriebenen und abgebildeten Ausführungsformen sind weitere Ausführungsformen vorstellbar, welche weitere Abwandlungen bzw. Kombinationen der beschriebenen Merkmale umfassen können.

Insbesondere wird darauf hingewiesen, dass die Form und die Anzahl bzw. die Anordnung der Mitnehmer 30, 40 und des korrespondierenden Mitnehmergegenstücks 22; 24 also der Versteifungsrippen 22 bzw. der Verdickungen 24 an den Versteifungsrippen 22 variieren kann. So ist etwa auch denkbar, die formschlüssige Verbindung mit nur einem Mitnehmerelement 32; 36 und einer oder zwei korrespondierenden Mitnehmergegenstücken bzw. Versteifungsrippen 22 auszugestalten. Alternativ ist auch denkbar, die Verdickung 24 an der Versteifungsrippe 22 des Gebläserotors 2 mit einem anderen Querschnitt als dem gezeigten Kreisquerschnitt auszubilden. So ist etwa denkbar, die Verdickung 24 der Versteifungsrippe 22 mit einem elliptischen, einem rechteckigen oder einem vieleckförmigen Querschnitt auszubilden. Auch wird darauf hingewiesen, dass die in der Ausführungsform gezeigten Mitnehmergegenstücke 22, 24 beispielhaft sind und selbstverständlich auch andersartig ausgebildet sein können. So ist etwa auch denkbar, dass das im Rotorgehäuse angeordnete Kühlluftgebläse 38 mit Kühlluftförderlamellen im Gebläserotor 20; 50 zu integrieren, wobei der Mitnehmer 30; 40 in die Förderlamellen des Kühlluftgebläses 38 als korrespondierendes Mitnehmergegenstück eingreift.

Auch ist denkbar, dass eine axiale Befestigung des Gebläserotors 20, 50 über die Presspassungen der Mitnehmer 30, 40 an den Versteifungsrippen 22 bzw. an der formschlüssigen Verbindung 22, 24, 30, 40 erfolgt.

## Patentansprüche

1. Gebläsemodul (1; 2), insbesondere für Klimageräte in Fahrzeugen, aufweisend einen Elektromotor (12) und einen Gebläserotor (20; 50), wobei der Elektromotor (12) und der Gebläserotor (20; 50) auf einer Rotorwelle (11) angeordnet sind und mittels einer Antriebsverbindung (22, 30; 24; 40) miteinander verbunden sind und wobei der Elektromotor (12) ausgelegt ist, den Gebläserotor (20; 50) über die Antriebsverbindung (22, 30; 24; 40) anzutreiben, wobei die Antriebsverbindung (22, 30; 24; 40) eine formschlüssige Verbindung (22, 30; 24; 40) mit einem Mitnehmer (30; 40) und einem Mitnehmergegenstück (22, 24) aufweist, wobei der Mitnehmer (30; 40) am Elektromotor (12) und das Mitnehmergegenstück (22, 24) am Gebläserotor (20; 50) radial beabstandet zur Rotorwelle (11) angeordnet sind, wobei der Mitnehmer (30; 40) des Elektromotors (12) ausgelegt ist, zur Kraftübertragung vom Elektromotor (12) zum Gebläserotor (20; 50) das Mitnehmergegenstück (22, 24) zu betätigen, **dadurch gekennzeichnet, dass** der Mitnehmer (30; 40) wenigstens zwei Mitnehmerelemente (31; 36) umfasst, die stiftförmig ausgebildet und parallel zu der Rotationsachse (10) ausgerichtet sind, wobei der Mitnehmer (30; 40) einen Mitnehmergrund (32) umfasst, wobei die wenigstens zwei Mitnehmerelemente (31; 36) U-förmig vom Mitnehmergrund (32) wegstehend angeordnet sind und eine Aufnahme (33) ausbilden.

2. Gebläsemodul (1; 2) nach Anspruch 1, **dadurch gekennzeichnet, dass** das Mitnehmergegenstück (22; 24) als Versteifungsrippe (22) des Gebläserotors (20; 50) ausgebildet ist, wobei der Mitnehmer (30; 40) die Versteifungsrippe (22) des Gebläserotors (20; 50) betätigt, um den Gebläserotor (20; 50) anzutreiben.

3. Gebläsemodul (1; 2) nach Anspruch 2, **dadurch gekennzeichnet, dass** das Mitnehmergegenstück als Verdickung (24) an der Versteifungsrippe (22) ausgebildet ist.

4. Gebläsemodul (1; 2) nach Anspruch 3, **dadurch gekennzeichnet, dass** die Verdickung (24) zylindrisch ausgebildet ist, wobei eine Längsachse (25) der zylindrischen Verdickung (24) in der Ebene der Versteifungsrippe (22) angeordnet ist.

5. Gebläsemodul (1; 2) nach Anspruch 3 oder 4, **dadurch gekennzeichnet, dass** die Dicke der Verdickung (24) der Versteifungsrippe (22) zu einer Dicke des stiftförmig ausgebildeten Mitnehmers (40) derart gewählt ist, dass über die aneinanderliegenden Berührkontakte der Verdickung (22) und des Mitnehmers (40) eine Kraft parallel zur Richtung der Rotationsachse (10) übertragbar ist.

6. Gebläsemodul (1; 2) nach einem der Ansprüche 2 bis 5, **dadurch gekennzeichnet, dass** die Aufnahme (33) eine Presspassung zu einer Dicke der Versteifungsrippe (22) in einem Befestigungsbereich der Versteifungsrippe (22) aufweist.

7. Gebläsemodul (1; 2) nach einem der Ansprüche 1 bis 6, **dadurch gekennzeichnet, dass** der Mitnehmer (30; 40) einstückig und materialeinheitlich mit dem Rotorgehäuse (19; 61) des Elektromotors (12) ausgebildet ist.

8. Gebläsemodul (1; 2) nach einem der Ansprüche 1 bis 7, **dadurch gekennzeichnet, dass** die Elektromotorwelle (11) zur axialen Sicherung mit dem Gebläserotor (20; 50) mittels einer kraftschlüssigen Verbindung (11, 23) verbunden ist, wobei der Mitnehmer (30; 40) und das korrespondierende Mitnehmergegenstück (22; 24) ausgelegt sind, überwiegend das Drehmoment des Elektromotors (12) an den Gebläserotor (20; 50) zu übertragen.

## Claims

1. Fan module (1; 2), in particular for air-conditioning units in vehicles, having an electric motor (12) and a fan rotor (20; 50), wherein the electric motor (12) and the fan rotor (20; 50) are arranged on a rotor shaft (11) and are connected to one another by means of a drive connection (22, 30; 24; 40), and wherein the electric motor (12) is designed to drive the fan rotor (20; 50) via the drive connection (22, 30; 24; 40), wherein the drive connection (22, 30; 24; 40) has a form-fitting connection (22, 30; 24; 40) with a driver (30; 40) and a driver counterpiece (22, 24), wherein the driver (30; 40) is arranged on the electric motor (12) and the driver counterpiece (22, 24) is arranged on the fan rotor (20; 50) so as to be radially spaced apart from the rotor shaft (11), wherein the driver (30; 40) of the electric motor (12) is designed to actuate the driver counterpiece (22, 24) in order to transmit force from the electric motor (12) to the fan rotor (20; 50), **characterized in that** the driver (30; 40) comprises at least two driver elements (31; 36) which are pin-shaped and oriented parallel to the axis of rotation (10), wherein the driver (30; 40) comprises a driver base (32), wherein the at least two driver elements (31; 36) are arranged projecting away from the driver base (32) in a U shape and form a receptacle (33).

2. Fan module (1; 2) according to Claim 1, **characterized in that** the driver counterpiece (22, 24) is designed as a stiffening rib (22) of the fan rotor (20; 50), wherein the driver (30; 40) actuates the stiffening rib (22) of the fan rotor (20; 50) in order to drive the fan rotor (20; 50).

3. Fan module (1; 2) according to Claim 2, **characterized in that** the driver counterpiece is formed as a thickened portion (24) on the stiffening rib (22).

4. Fan module (1; 2) according to Claim 3, **characterized in that** the thickened portion (24) is of cylindrical form, wherein a longitudinal axis (25) of the cylindrical thickened portion (24) is arranged in the plane of the stiffening rib (22).

5. Fan module (1; 2) according to Claim 3 or 4, **characterized in that** the thickness of the thickened portion (24) of the stiffening rib (22) is selected in relation to a thickness of the pin-shaped driver (40) in such a way that a force can be transmitted parallel to the direction of the axis of rotation (10) via the mutually touching contacts of the thickened portion (22) and of the driver (40).

6. Fan module (1; 2) according to one of Claims 2 to 5, **characterized in that** the receptacle (33) has a press fit with a thickness of the stiffening rib (22) in a fastening region of the stiffening rib (22).

7. Fan module (1; 2) according to one of Claims 1 to 6, **characterized in that** the driver (30; 40) is formed in one piece and as a single material with the rotor housing (19; 61) of the electric motor (12).

8. Fan module (1; 2) according to one of Claims 1 to 7, **characterized in that**, for axial securement to the fan rotor (20; 50), the electric motor shaft (11) is connected by means of a force-fitting connection (11, 23), wherein the driver (30; 40) and the corresponding driver counterpiece (22; 24) are designed to predominately transmit the torque of the electric motor (12) to the fan rotor (20; 50).

## Revendications

1. Module de soufflante (1; 2), en particulier pour des systèmes de climatisation de véhicules, présentant un moteur électrique (12) et un rotor de soufflante (20; 50), dans lequel le moteur électrique (12) et le rotor de soufflante (20; 50) sont disposés sur un arbre de rotor (11) et sont reliés l'un à l'autre au moyen d'une liaison d'entraînement (22, 30; 24; 40) et dans lequel le moteur électrique (12) est conçu pour entraîner le rotor de soufflante (20; 50) par l'intermédiaire de la liaison d'entraînement (22, 30; 24; 40), dans lequel la liaison d'entraînement (22, 30; 24; 40) présente une liaison par emboîtement (22, 30; 24; 40) avec un élément d'entraînement (30; 40) et un contre-élément d'entraînement (22, 24), dans lequel l'élément d'entraînement (30; 40) est disposé sur le moteur électrique (12) et le contre-élément d'entraînement (22, 24) est disposé sur le rotor de soufflante (20; 50) radialement à distance de l'arbre de rotor (11), dans lequel l'élément d'entraînement (30; 40) du moteur électrique (12) est conçu pour actionner le contre-élément d'entraînement (22, 24) pour la transmission de force du moteur électrique (12) au rotor de soufflante (20; 50), **caractérisé en ce que** l'élément d'entraînement (30; 40) comprend au moins deux parties d'élément d'entraînement (31; 36), qui sont réalisées en forme de tige et qui sont orientées parallèlement à l'axe de rotation (10), dans lequel l'élément d'entraînement (30; 40) comprend un fond d'élément d'entraînement (32), dans lequel lesdites au moins deux parties d'élément d'entraînement (31; 36) sont disposées en forme de U s'écartant du fond d'élément d'entraînement (32) et forment un logement (33).

2. Module de soufflante (1; 2) selon la revendication 1, **caractérisé en ce que** le contre-élément d'entraînement (22; 24) est réalisé sous forme de nervure de renforcement (22) du rotor de soufflante (20; 50), dans lequel l'élément d'entraînement (30; 40) actionne la nervure de renforcement (22) du rotor de soufflante (20; 50), afin d'entraîner le rotor de soufflante (20; 50) .

3. Module de soufflante (1; 2) selon la revendication 2, **caractérisé en ce que** le contre-élément d'entraînement est formé par une surépaisseur (24) sur la nervure de renforcement (22).

4. Module de soufflante (1; 2) selon la revendication 3, **caractérisé en ce que** la surépaisseur (24) est de forme cylindrique, dans lequel un axe longitudinal (25) de la surépaisseur cylindrique (24) est disposé dans le plan de la nervure de renforcement (22).

5. Module de soufflante (1; 2) selon une revendication 3 ou 4, **caractérisé en ce que** l'épaisseur de la surépaisseur (24) de la nervure de renforcement (22) par rapport à une épaisseur de l'élément d'entraînement (40) réalisé en forme de tige est choisie de telle manière qu'une force parallèle à la direction de l'axe de rotation (10) soit transmise par les points de contact appliqués l'un sur l'autre de la surépaisseur (22) et de l'élément d'entraînement (40).

6. Module de soufflante (1; 2) selon l'une quelconque des revendications 2 à 5, **caractérisé en ce que** le logement (33) présente un ajustement serré à une épaisseur de la nervure de renforcement (22) dans une zone de fixation de la nervure de renforcement (22).

7. Module de soufflante (1; 2) selon l'une quelconque des revendications 1 à 6, **caractérisé en ce que** l'élément d'entraînement (30; 40) est formé d'une seule pièce et d'une seule matière avec le boîtier de rotor (19; 61) du moteur électrique (12).

8. Module de soufflante (1; 2) selon l'une quelconque des revendications 1 à 7, **caractérisé en ce que** l'arbre de moteur électrique (11) est relié pour le blocage axial au rotor de soufflante (20; 50) au moyen d'une liaison par adhérence (11, 23), dans lequel l'élément d'entraînement (30; 40) et le contre-élément d'entraînement correspondant (22; 24) sont conçus pour transmettre principalement le couple de rotation du moteur électrique (12) au rotor de soufflante (20; 50).
